(19) **Europäisches Patentamt / European Patent Office / Office européen des brevets**

(11) **EP 2 787 464 B1**

(12) **EUROPEAN PATENT SPECIFICATION**

(45) Date of publication and mention
of the grant of the patent:
**03.10.2018 Bulletin 2018/40**

(51) Int Cl.:
**G06Q 10/00** *(2012.01)*  **G06Q 50/06** *(2012.01)*
**G06F 21/60** *(2013.01)*  **H04L 29/06** *(2006.01)*

(21) Application number: **14156960.8**

(22) Date of filing: **27.02.2014**

(54) **Data managing apparatus, meter apparatus and data managing method**

Datenverwaltungsvorrichtung, Messgerät Vorrichtung und Datenverwaltungsverfahren

Appareil de gestion de données, appareil de mesure et procédé de gestion de données

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2013 JP 2013079530**

(43) Date of publication of application:
**08.10.2014 Bulletin 2014/41**

(73) Proprietor: **Kabushiki Kaisha Toshiba
Tokyo 105-8001 (JP)**

(72) Inventors:
• **Kaneko, Yu
Tokyo, 105-8001 (JP)**
• **Ise, Kotaro
Tokyo, 105-8001 (JP)**

• **Matsuzawa, Shigeo
Tokyo, 105-8001 (JP)**

(74) Representative: **Hoffmann Eitle
Patent- und Rechtsanwälte PartmbB
Arabellastraße 30
81925 München (DE)**

(56) References cited:
WO-A1-2012/103896     US-A1- 2012 137 126
US-A1- 2012 245 870     US-A1- 2012 297 198

• **Osman Ugus: "Asymmetric Homomorphic
Encryption Transformation for Securing
Distributed Data Storage in Wireless Sensor
Networks", , 1 April 2007 (2007-04-01),
XP055138239, Retrieved from the Internet:
URL:http://www.ist-ubisecsens.org/publicat
ions/diplarb_ugus.pdf [retrieved on 2014-09-04]**

**Description**

<u>FIELD</u>

Embodiment of the present invention relates to a data managing apparatus, a meter apparatus and a data managing method.

<u>BACKGROUND</u>

There is a method of adjusting demand for power, called DR (Demand Response). In the DR, a power supplier (a power company or the like) requests a power customer (a power consumer) to reduce power consumption or change a period of consumption.

The DR is classified into a price-type DR and an incentive-type DR.

The price-type DR adjusts demand for power by changing an electricity unit price. Typically, the power supplier sets a high electricity unit price for a period of time (several ten minutes to several hours) in which demand for power is intended to be reduced, and notifies the information to the customer. The customer having received the notice can cooperate with the adjustment of supply and demand by consuming power while avoiding the period of high electricity unit price.

The incentive-type DR adjusts demand for power by giving an incentive for reduction of power consumption. Typically, the incentive is "money." The power supplier determines a period of time in which power consumption is intended to be reduced, a power amount that is intended to be reduced, and an incentive amount to be given when the reduction is successful, and then notifies the information to the customer. The customer having received the notice can get the incentive by reducing power consumption.

The DR is merely "a request," and does not forcibly control demand of power. The customer can consume power in the period of high electricity unit price and can consume power without getting the incentive.

The information notified to the customer such as an electricity unit price is sent from a system of the power supplier to a system of the customer, using an information technology. The system of the customer varies. If the customer is a building owner, a BEMS (Building Energy Management System) is applicable, and if being a resident in a house, an HEMS (Home Energy Management System), a smart meter or the like is applicable. Also, a terminal computer such as a personal computer or a smart phone possessed by the customer is applicable.

The smart meter is an electrical power meter. It is different from conventional electrical power meters in that 1) power consumption can be measured on a several-ten-minute basis, and 2) a communication function is included. By using the smart meter, the power supplier can easily collect power consumption information. Furthermore, it is possible not only to perform a billing on a monthly basis, but also to provide a service that utilizes the power consumption information on a several-ten-minute basis to the customer.

The smart meter improves convenience whereas it creates a privacy issue. This is because the easy collection of the power consumption information on a several-ten-minute basis allows for a presumption of "the period of time when the customer is at home," "the kind of a home electrical appliance that the customer uses" or the like, from the temporal transition of power consumption.

As a solution to this problem, the following method is known. This method uses a billing server, a smart meter and an MDMS (Meter Data Managing System).

1. The smart meter encrypts the measured power consumption information using a homomorphic encryption technique, and sends it to the MDMS. In the homomorphic encryption technique, the following expression holds:

$$enc(k1, d1) + enc(k1, d2) = enc(k1, (d1 + d2))$$

where, d1 is data 1, d2 is data 2, and k1 is key 1. Furthermore, enc(k1, d1) represents the result from encrypting d1 using k1 by the homomorphic encryption technique. By using the homomorphic encryption technique, encrypted data are summed up and then decrypted, and thereby, the sum total of data is obtained.

2. The MDMS integrates the power consumption information (encrypted), and creates a monthly integrated value (encrypted) of power consumption.

3. The MDMS acquires a decryption key from the smart meter, and decrypts the monthly integrated value (encrypted) of power consumption.

4. The MDMS provides the decrypted "monthly integrated value of power consumption" to the billing server.

5. The billing server performs a billing calculation, based on the "monthly integrated value of power consumption."

Thus, the above method uses the homomorphic encryption technique, and thereby, allows for a calculation of the "monthly integrated value of power consumption" without decrypting the power consumption on a several-ten-minute basis. Thereby, there is no need to transmit the power consumption on a several-ten-minute basis to the billing server, and therefore it is possible to protect the privacy of the customer.

The above method assumes that an electricity unit price plan for a month is fixed. Therefore, in the case where the electricity unit price changes on a several-ten-minute basis by implementation of the price-type DR, it is impossible to properly perform the billing calculation. Meanwhile, in view of protection of the privacy of the customer, it is desirable to avoid providing the power consumption on a several-ten-minute basis to the billing server, for the billing calculation.

International application WO 2012/103896 A1 discloses a system of smart meters using a bidirectional homomorphic encryption technique to provide privacy, but does not provide the option for a more flexible pricing policy.

Patent application US 2012/245870 discloses a system of smart meters using commitment schemes. Different pricing policies can be used while providing privacy.

The invention is defined by the appended claims.

BRIEF DESCRIPTION OF THE DRAWINGS

FIG. 1 shows an overall system configuration of a DR execution environment according to a first embodiment;
FIG. 2 shows a DR issuing system according to the first embodiment;
FIG. 3 shows an HEMS according to the first embodiment;
FIG. 4 shows an SM according to the first embodiment;
FIG. 5 shows an MDMS according to the first embodiment;
FIG. 6 shows a sequence of a billing calculation process according to the first embodiment;
FIG. 7 shows an example of a calculation of an integrated value (encrypted) of power consumption for each unit price;
FIG. 8 shows an overall system configuration of a DR execution environment according to a second embodiment;
FIG. 9 shows an SM according to the second embodiment; and
FIG. 10 shows a sequence of a billing calculation process according to the second embodiment.

DETAILED DESCRIPTION

According to one embodiment, there is provided a data managing apparatus including: a storage, a power consumption acquiring unit, an information generating unit and a sending unit.

The storage stores information on an electricity unit price applied to a customer for each of a plurality of periods of time.

The power consumption acquiring unit acquires a history of power consumption for the customer, from a meter apparatus of the customer.

The information generating unit sums up the power consumption for ones of the periods of time for which same electricity unit price is applied to generate first information indicating an integrated value of the power consumption for each electricity unit price.

The sending unit sends the first information to an external system.

Hereinafter, embodiments of the present invention will be described with reference to the drawings.

(First Embodiment)

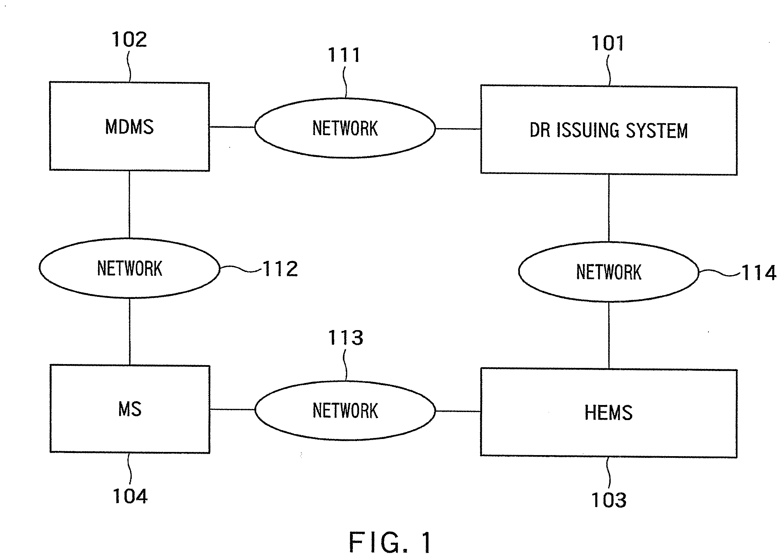

FIG. 1 shows an overall system configuration of a DR execution environment according to a first embodiment.

The system includes a DR issuing system 101, an MDMS (Meter Data Managing System) 102, a customer 103 and an SM (Smart Meter) 104. The MDMS 102 corresponds to a data managing apparatus according to the embodiment, and the SM 104 corresponds to a meter apparatus according to the embodiment. The figure shows the case where the customer 103 is an HEMS (Home Energy Managing System), but it may be another system such as a BEMS (Building Energy Managing System) or a FEMS (Factory Energy Managing System).

The DR issuing system 101 and the MDMS 102 are connected through a network 111, the MDMS 102 and the SM 104 are connected through a network 112, the SM 104 and the HEMS 103 are connected through a network 113, the HEMS 103 and the DR issuing system 101 are connected through a network 114, and they can communicate with each other, respectively. The networks 111 to 114 may be wireless networks or wired networks. The mutual authentication and encryption at time of communication are implemented by existing techniques such as the PKI (Public Key Infrastructure) and the TLS (Transport Layer Security).

In the figure, only one customer and only one SM are shown respectively, but actually, there may be numerous.

The DR issuing system 101 includes a billing server (a function of billing an electricity price (electric bill)) that performs a billing calculation for the customer. Here, a configuration in which the billing server and the DR issuing system 101 are separated is also possible.

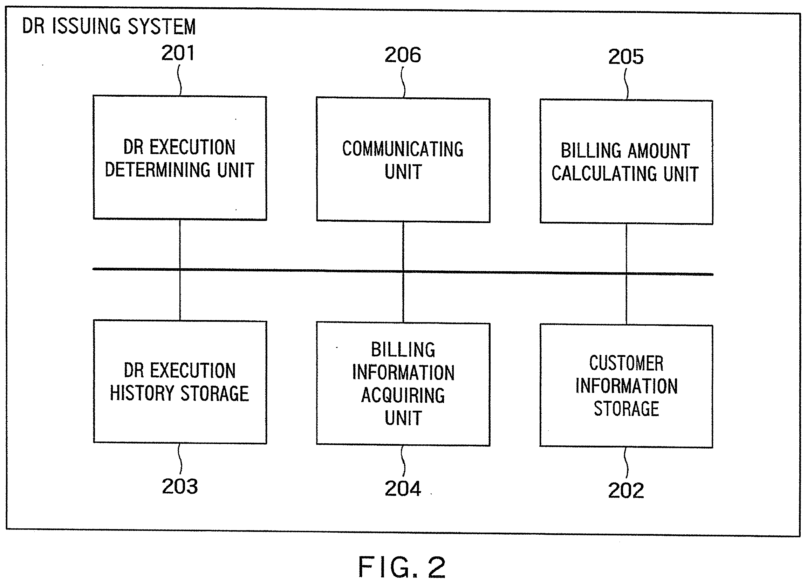

FIG. 2 shows the DR issuing system 101.

A communicating unit 206 communicates with the customer 103 and the MDMS 102 through the networks 114, 111, respectively.

A DR execution determining unit 201 determines the issue of a DR, and generates DR information. Specifically, it determines customers who are subjects of the DR, a DR type (price-type or incentive-type), and a DR application duration. Further, it determines an electricity unit price per unit time (15 minutes or 30 minutes) in the case of being the price-type, or a reduction target of power consumption and an incentive amount in the case of being the incentive-type, and the like. Thereby, it generates the DR information. The DR information contains, for example, customer IDs, the DR type, the DR application duration, the electricity unit price per unit time, the reduction target, the incentive amount, and the like. For determining whether a DR is issued, information such as a predicted value of demand for power, a predicted value of weather information, a predicted value of the power generation amount by natural energy, and a power generation plan is utilized. The DR execution determining unit 201 sends the generated DR information to the customer and the like through the communicating unit 206.

A customer information storage 202 stores the information of the customer. In the following, an example of the information of the customer will be shown.

> Customer ID -- an ID for uniquely identifying the customer
> SMID -- an ID of the SM that measures the power consumption of the customer
> Communication information -- information about the communication of the customer with the HEMS and the SM, for example, an IP address, a port number, and the like.
> Account information -- information of a bank account necessary to perform a billing and a giving of an incentive.

A DR execution history storage 203 stores the DR information issued by the DR execution determining unit 201.

A billing information acquiring unit 204 acquires the information necessary for billing, from the MDMS 102. The information necessary for billing contains an "integrated value (encrypted) for each unit price" and a "decryption key for each unit price."

The "integrated value (encrypted) for each unit price" is a value resulting from integrating encrypted power consumption for each period of the same electricity unit price, in a billing application duration T1. The "decryption key for each unit price" is a decryption key generated for each electricity unit price in order to decrypt the corresponding integrated value (encrypted) for each unit price. These will be described in detail later.

A billing amount calculating unit 205 acquires an integrated value for each unit price, by decrypting the integrated value (encrypted) for each unit price with the decryption key for each unit price. The billing amount calculating unit 205 calculates a billing amount using the integrated value for each unit price.

The power consumption of the customer on a short time basis such as a several-ten-minute basis is not notified to the DR issuing system. Therefore, it is possible to perform the billing calculation while protecting the privacy of the customer.

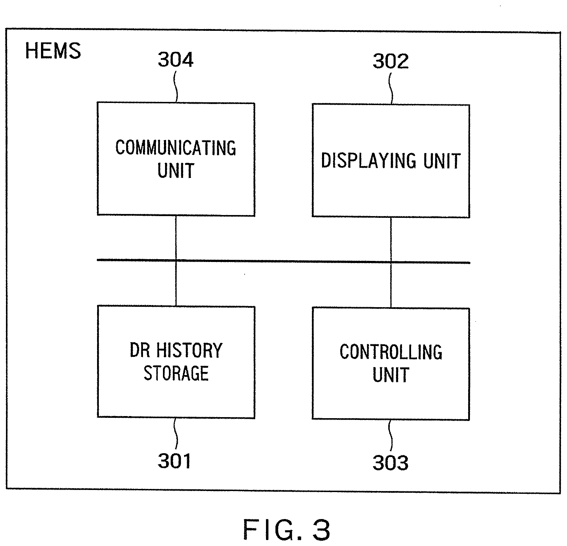

FIG. 3 shows the HEMS 103.

A communicating unit 304 communicates with the DR issuing system and the SM 104 through the networks 114, 113, respectively. The communicating unit 304 receives the DR information issued by the DR issuing system 101, and receives the data of the power consumption measured at a fixed time interval from the SM 104, and the like.

A DR history storage 301 stores the DR information (the DR type, the DR application duration, the electricity unit price per unit time, the reduction target, the incentive amount and the like) received from the DR issuing system 101.

A displaying unit 302 displays the DR information stored in the DR history storage 301 and the power consumption measured by the SM 104.

A controlling unit 303 controls household appliances such as an air conditioner and lighting, based on the DR information. This leads to a home energy saving.

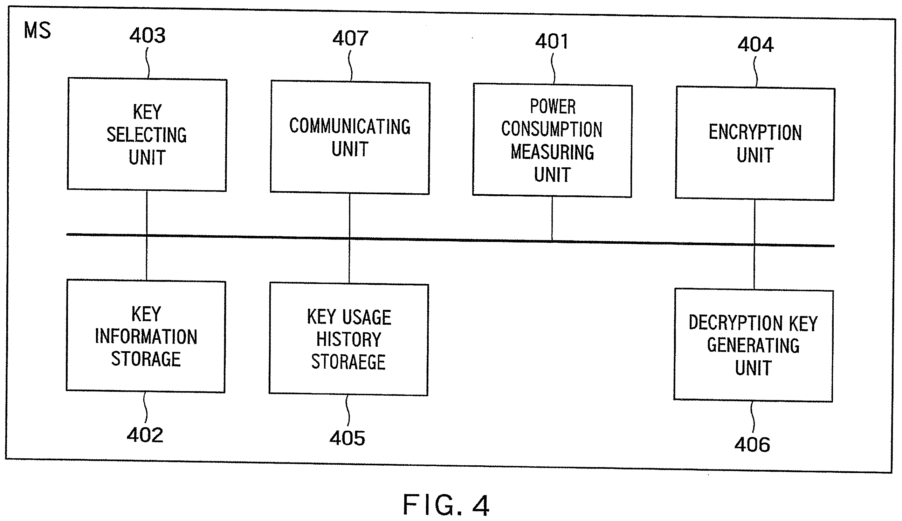

FIG. 4 shows the SM 104.

A power consumption measuring unit 401 measures the power amount consumed at home, periodically (every fifteen minutes, every thirty minutes, or the like).

A key information storage 402 stores a key for encrypting the power consumption periodically measured. The "key" is random numbers to be used for an encryption process. A plurality of the keys are stored. Each key has a key ID for identifying the key.

A key selecting unit (key determining unit) 403 selects a key for encrypting the measured power consumption, from the keys stored in the key information storage 402. The selecting method comes in several methods such as a method of being randomly selected, or a method of being selected in the key ID order. Any method may be used.

Also, the key selecting unit 403 determines a duration in which the selected key is used. The determining method of the use duration comes in several methods such as a method of using a fixed duration previously set, or a method of randomly determining a duration. Any method may be used.

In the embodiment, the key is selected from the keys stored in the key information storage 402. As another method, the key can be dynamically generated using random numbers.

Thus, the key selecting unit 403 is configured to switch the key to be used for encryption depending on time.

An encrypting unit 404 encrypts the power consumption measured by the power consumption measuring unit 401, with the key selected by the key selecting unit 403. For the encryption, a bidirectionally homomorphic encryption technique is used. When using the bidirectionally homomorphic encryption technique, the following expression holds.

$$\mathrm{enc(k1, d1) + enc(k2, d2) = enc((k1 + k2), (d1 + d2))}$$

By using the bidirectionally homomorphic encryption technique, encrypted data are summed up and then decrypted, and thereby, the sum total of data is obtained. In decryption, it is necessary to use the sum total of keys with which the respective data are encrypted.

A key usage history storage 405 stores a key usage history indicating which key has been used and in which period of time it has been used. In the following, specific items of the key usage history will be shown.

> Start time -- a time (year, month, date, hour, minute, second) when the use of the key started
> End time -- a time (year, month, date, hour, minute, second) when the use of the key ended
> Key ID -- an ID for uniquely identifying the key

A decryption key generating unit 406 generates the decryption key for each unit price to decrypt the integrated value (encrypted) for each unit price. The decryption key for each unit price is generated by summing up the keys used for encrypting the power consumption each of which was an object of the integration for each unit price. A specific example will be described later.

A communicating unit 407 communicates with the HEMS 103 and the MDMS 102 through the networks 113, 112, respectively. The communicating unit 407 sends the power consumption information containing the following items, to the MDMS 102. The measurement start time and measurement end time are a star time and end time whenever the power consumption is measured at a fixed time interval. In some cases, a period of time corresponding to the length of the fixed time interval is referred to as a period of measurement.

> SMID
> Power consumption (encrypted) -- power consumption encrypted by the SM
> Measurement start time -- a time (year, month, date, hour, minute, second) when the measurement of power consumption started
> Measurement end time -- a time (year, month, date, hour, minute, second) when the measurement of power consumption ended

The communicating unit 407 may send the power consumption information whenever the power consumption is measured, or may collectively send the information whenever certain pieces of the power consumption information are accumulated in a buffer (a memory or a disk). Alternatively, it is allowable to accumulate the power consumption information in a buffer of the SM, and, at the timing of being requested from the MDMS 102, send the requested power consumption information.

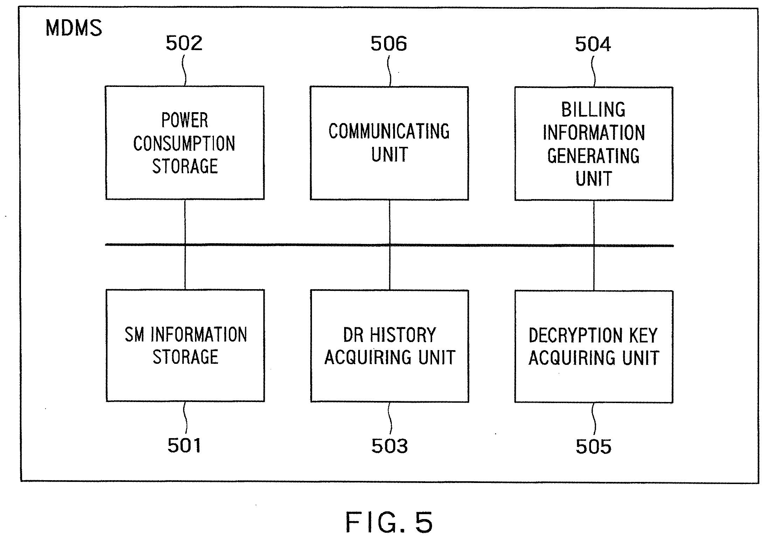

FIG. 5 shows the MDMS 102.

An SM information storage 501 stores the information of the SM (the SMID, communication information or the like).

A power consumption storage 502 stores the power consumption information received from the SM through a communicating unit 506, as a history of the power consumption for the customer.

A DR history acquiring unit 503 acquires the DR history from the HEMS 103 through the SM 104. The DR history may be acquired from the DR issuing system 101 or the HEMS 103 when it can be directly acquired from the DR issuing system 101 or the HEMS 103. In the case of directly acquiring the DR history from the HEMS 103, the MDMS 102 can communicate with the HEMS 103 through a network that is not shown in the figure.

A billing information generating unit 504 calculates the above-described integrated value (encrypted) for each unit price, as the information necessary for a billing process performed by the DR issuing system 101. Specifically, it calculates the integrated value (encrypted) for each unit price, by integrating the power consumption (encrypted) for each period of the same electricity unit price. The period of the same electricity unit price can be judged from the DR history. In a period of time when the DR is not applicable, a normal electricity unit price is applied. The normal electricity unit price is not dynamically changed, and therefore, may be obtained in advance.

A decryption key acquiring unit 505 acquires the above-described decryption key for each unit price, from the SM 104.

A communicating unit (sending unit, receiving unit) 506 communicates with the SM 104 and the DR issuing system 101 through the networks 111, 112, respectively. The communicating unit 506 sends the integrated value (encrypted) for each unit price and the decryption key for each unit price, to the DR issuing system 101. Here, the communicating unit 506 may send these integrated value (encrypted) and decryption key to an alternative system (for example, a dedicated server for storing data) that is different from the DR issuing system. In this case, the DR issuing system 101 acquires these integrated value (encrypted) and decryption key, by accessing the alternative server. The DR issuing system and the alternative system correspond to a mode of an external system with which the communicating unit 506 communicates.

In the following, the behavior of the embodiment will be described.

First, a sequence of the key selection of the SM 104 is shown as follows.

1. The key selecting unit 403 selects a key k1 that is used for encryption.
2. The key selecting unit 403 determines a duration in which the key k1 is used.
3. The key ID of the key k1 and the use duration are registered with the key usage history storage 405.
4. When the end time of the use of the key k1 comes, the sequence returns to procedure 1.

Next, a measurement sequence of the power consumption in the SM 104 is shown as follows.

1. The power consumption measuring unit 401 measures the power consumption at a fixed time interval (15 minutes or 30 minutes).
2. The encrypting unit 404 encrypts the power consumption by the bidirectionally homomorphic encryption technique. For the encryption, the key k1 selected in the key selection sequence is used.
3. The communicating unit 407 sends the power consumption information containing the encrypted power consumption, the measurement start time, the measurement end time and the SMID, to the MDMS 102.
4. The MDMS 102 records the received power consumption information in the power consumption storage 502.

Next, a sequence of the DR issue in the DR issuing system 101 is shown as follows.

1. The DR execution determining unit 201 determines the issue of the DR, and generates the DR information.
2. The DR execution determining unit 201 sends the DR information to the customer (HEMS) 103 through the communicating unit 206. The sending method and how the DR information is expressed may be in any suitable way.
3. The HEMS 103 records the received DR information in the DR history storage 301.

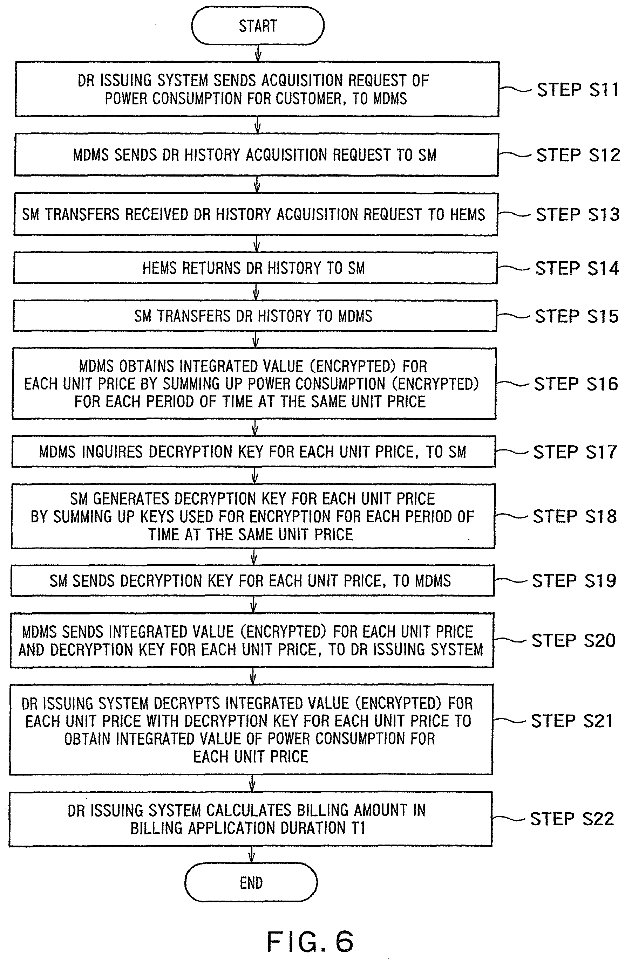

Next, a sequence of a billing calculation process according to the first embodiment will be described using FIG. 6.

In step S11, the billing information acquiring unit 204 of the DR issuing system 101 sends an acquisition request of the power consumption for the customer who is to be billed, to the MDMS 102. This request contains the ID (SMID) of the SM of the customer who is to be billed, and the billing application duration T1. The length of the billing application duration T1 may be arbitrary, and is typically a month.

In step S12, when receiving the acquisition request of the power consumption, the DR history acquiring unit 503 of the MDMS 102 sends a DR history acquisition request to the SM designated by the SMID. The DR history acquisition request contains the billing application duration T1.

In step S13, the SM transfers the DR history acquisition request received from the MDMS 102, to the HEMS.

In step S14, when receiving the DR history acquisition request from the SM, the HEMS specifies the DR history in the DR application duration that is contained in the billing application duration T1, and returns it to the SM.

In step S15, the SM sends the DR history acquired from the HEMS, to the MDMS 102.

In step S16, the billing information generating unit 504 of the MDMS 102 obtains the electricity unit price that is applied to the customer during each period of measurement in the billing application duration T1, from the DR history. The electricity unit price in the duration when the DR is not applicable in the billing application duration T1 may be acquired from the DR issuing system 101, may be obtained in advance, or may be acquired from the HEMS 103 together with the DR history.

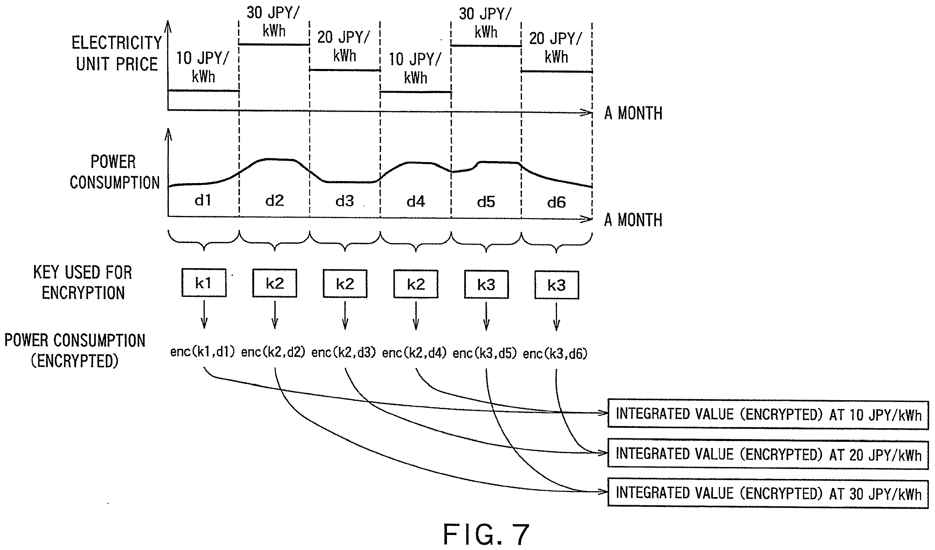

The billing information generating unit 504 sums up the power consumption (encrypted) stored in the power consumption storage 502, for each period of the same electricity unit price. Thereby, the integrated value (encrypted) for each unit price is obtained. FIG. 7 shows an image of this calculation.

In the figure, the sections separated by the dotted lines correspond to periods of time of measurement. In the leftmost section, the electricity unit price is 10 JPY/kWh (JPY is Japanese currency. Other currency, USD, EUR, GBP, or CHF, etc. may be used instead of JPY). The data of the power consumption in this leftmost section is represented as d1. The SM uses the key k1 in this section and encrypts the power consumption d1 with the key k1, and thereby, the encrypted power consumption enc(k1, d1) is obtained.

In the fourth section from the left, also, the electricity unit price is 10 JPY/kWh. The data of the power consumption in this section is represented as d4. The SM uses the key k2 in this section and encrypts the power consumption d4 with the key k2, and thereby, the encrypted power consumption enc(k2, d4) is obtained.

Therefore, the integrated value for the periods of time at 10 JPY/kWh is obtained as the sum (= enc(k1, d1) + enc(k2, d4)) of enc(k1, d1) and enc(k2, d4). Similarly, the integrated value for the periods of time at 20 JPY/kWh is enc(k2, d3) + enc(k3, d6), and the integrated value for the periods of time at 30 JPY/kWh is enc(k2, d2) + enc(k3, d5).

In the example shown in the figure, the period of measurement and the use duration of the key are in one-to-one correspondence, but are not limited to this. For example, the key may be switched in a single period of time. In this case, the SM may divide the power consumption in the single period of time, at the switching time of the key, and encrypt the divided power consumption with the respective keys. In contrast, the same key may be continuously used over plural periods of time of measurement.

In step S17, the decryption key acquiring unit 505 of the MDMS 102 inquires the key (the decryption key for each unit price) for decrypting the integrated value (encrypted) for each unit price, to the SM. Here, in the case where the DR history contains a period of time when the incentive-type DR has been implemented, the key for decrypting the power consumption (encrypted) in the period of time is also inquired to the SM.

In step S18, the decryption key generating unit 406 of the SM obtains the electricity unit price that is applied during each period of measurement in the billing application duration T1, from the DR history. Furthermore, it obtains the key used during each period of measurement, from the information of the key usage history storage 405. Then, it sums up the used keys for each period of the same electricity unit price. Thereby, the decryption key for each unit price is generated. Based on the bidirectionally homomorphic encryption theory, by using the decryption key for each unit price, the integrated value (encrypted) for each unit price can be decrypted.

In the example shown in FIG. 7, the decryption key for 10 JPY/kWh is the sum (k1 + k2) of the key k1 and the key k2, the decryption key for 20 JPY/kWh is the sum (k2 + k3) of the key k2 and the key k3, and the decryption key for 30 JPY/kWh is the sum (k2 + k3) of the key k2 and the key k3.

In step S19, the SM sends the decryption key for each unit price to the MDMS 102. In the case where there is an implementation history of the incentive-type DR, it sends also the key for decrypting the power consumption (encrypted) for each period of measurement in the DR application duration, to the MDMS 102. In the incentive-type DR, it is necessary to check "the achievement of the reduction target" for each period of measurement. Therefore, the key used during each period of measurement in the DR application duration is sent without being summed up.

In step S20, the MDMS 102 sends the integrated value (encrypted) for each unit price obtained in step S16 and the decryption key for each unit price received in step S19, to the DR issuing system 101.

In step S21, the billing amount calculating unit 205 of the DR issuing system 101 decrypts the integrated value (encrypted) for each unit price, with the decryption key for each unit price. As a result, the integrated value of the power consumption for each electricity unit price in the billing application duration T1 is obtained.

In the example shown in FIG. 7, for the electricity unit price 10 JPY/kWh, by decrypting the encrypted integrated value (enc(k1, d1) + enc(k2, d4)) with the decryption key (k1 + k2), the integrated value d1 + d4 is obtained. Similarly, for 20 JPY/kWh and 30 JPY/kWh, the integrated value d3 + d6 and the integrated value d2 + d5 are respectively obtained as the decryption results.

In step S22, the billing amount calculating unit 205 calculates the billing amount in the billing application duration T1. Basically, the billing amount is the value resulting from summing up the products of the electricity unit prices and the respective integrated values. In the example shown in FIG. 7, the billing amount is $10 \times (d1 + d4) + 20 \times (d3 + d6) + 30 \times (d2 + d5)$. Furthermore, by adding other fees such as a basic fee, and decreasing the price if necessary, the billing amount is calculated. For example, in the case where the incentive-type DR has been implemented and the reduction target has been achieved, the price is decreased. The method of the billing calculation may be arbitrary.

From the above, in the demand response system according to the embodiment, even when the electricity unit price changes, it is unnecessary to transmit the power consumption of the customer on a short time basis such as a several-ten-minute basis, to the DR issuing system 101. Therefore, it is possible to perform the billing calculation while protecting the privacy of the customer.

Furthermore, in the embodiment, the key by the bidirectionally homomorphic encryption technique is changed depending on time (for example, periodically), and therefore, it is difficult that the MDMS side specifies the "decryption key for each unit price." Accordingly, it is difficult that, for example, the MDMS side specifies the "decryption key for each unit price" and by reference to the DR information, decrypts the power consumption of the customer on a several-ten-minute basis. Thereby, the privacy of the customer is protected.

(Variation 1)

In the embodiment, the encrypted integrated value of the power consumption is sent from the MDMS to the DR issuing system, but a configuration in which the integrated value is decrypted in the MDMS and then is sent is also possible. In this case, the billing information generating unit 504 of the MDMS or a separately-added processing unit decrypts the encrypted integrated value of the power consumption with the decryption key, and sends the decrypted integrated value to the DR issuing system. In the configuration, it is unnecessary to send the decryption key to the DR issuing system.

(Variation 2)

In the embodiment, the encrypted power consumption is sent from the SM to the MDMS, but the power consumption may be sent to the MDMS without being encrypted. In the case where it is no problem to disclose the power consumption of the customer on several-ten-minute basis to the MDMS side, such a configuration can be adopted. In this case, the billing information generating unit 504 of the MDMS may integrate the power consumption that is not encrypted, for each period of the same price, and send the integrated value to the DR issuing system 101.

(Second Example)

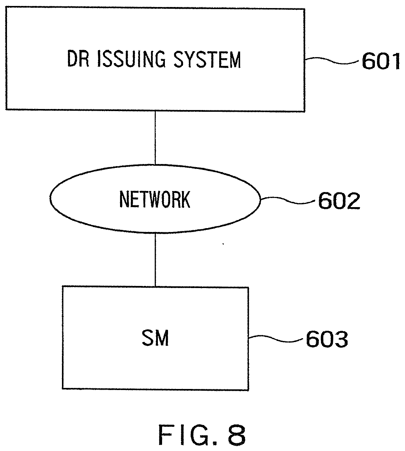

FIG. 8 shows an overall system configuration of a DR execution environment according to a example.
The system includes a DR issuing system 601 and an SM 603. The SM 603 has the functions of the HEMS and MDMS in the first embodiment. The DR issuing system 601 and the SM 603 communicate through a network 602. Hereinafter, the difference from the first embodiment will be mainly described.

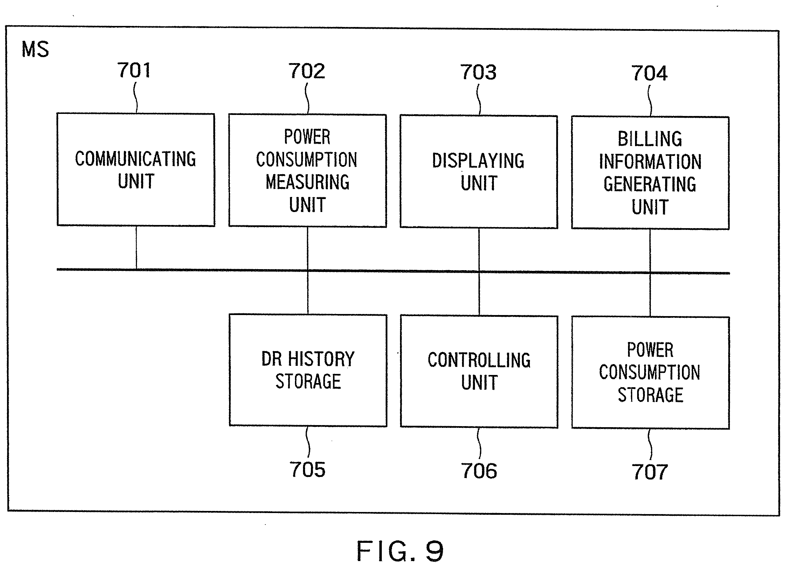

FIG. 9 shows the SM 603.
The SM 603 includes a communicating unit 701, a power consumption measuring unit 702, a displaying unit 703, a billing information generating unit 704, a DR history storage 705, a controlling unit 706, and a power consumption storage 707.
The communicating unit 701 communicates with the DR issuing system 601 through the network 602. Similarly to the first embodiment, the power consumption measuring unit 702 periodically measures the power consumption consumed at home.
The power consumption storage 707 and the billing information generating unit 704 have the same functions as the power consumption storage 502 and the billing information generating unit 504 that are included in the MDMS according to the first embodiment.
The controlling unit 706, the DR history storage 705 and the displaying unit 703 have the same functions as the controlling unit 303, the DR history storage 301 and the displaying unit 302 that are included in the HEMS according to the first embodiment.
In the example, since the MDMS is not present, only the SM retains the power consumption on a several-ten-minute basis. Therefore, the power consumption does not need to be encrypted, and the encrypting unit 404, the decryption key generating unit 406 and the like that are included in the SM according to the first embodiment are not necessary.
Similarly to the first embodiment, the block diagram of the DR issuing system is shown by FIG. 2. The description of FIG. 2 has been given in the first embodiment, and thereby is omitted.
In the following, a measurement sequence of the power consumption according to the example will be shown.

1. The power consumption measuring unit 702 measures the power consumption at a fixed time interval (15 minutes or 30 minutes).
2. The power consumption, the measurement start time and the measurement end time are recorded in the power consumption storage 707. The measurement start time and measurement end time are the start time and end time of the measurement at a fixed time interval.

The sequence of the DR issue is the same as the first embodiment, and thereby the description is omitted.

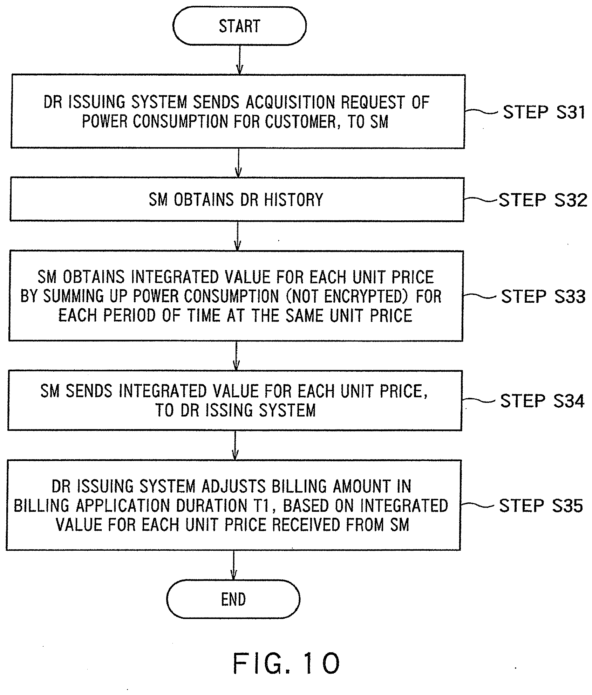

FIG. 10 shows a sequence of a billing calculation process according to the second example.
In step S31, the billing information acquiring unit 204 of the DR issuing system 601 sends an acquisition request of the power consumption for the customer who is to be billed, to the SM. This acquisition request of the power consumption contains the ID (SMID) of the SM of the customer who is to be billed, and the billing application duration T1. The billing application duration T1 is typically a month.
In step S32, when receiving the acquisition request of the power consumption from the DR issuing system, the SM obtains the DR history in the DR application duration contained in the billing application duration T1, based on the content of the DR history storage 705.

In step S33, the billing information generating unit 704 of the SM obtains the electricity unit price that is applied to the customer during each period of measurement in the billing application duration T1, from the DR history obtained in step S32. Then, the power consumption (not encrypted) stored in the power consumption storage 707 are summed up for each period of the same electricity unit price. Thereby, the integrated value for each unit price is generated.

In step S34, the SM sends the integrated value for each unit price, to DR issuing system 601.

In step S35, the billing amount calculating unit 205 of the DR issuing system 601 receives the integrated value for each unit price, from the SM. Then, the billing amount in the billing application duration T1 is calculated.

From the above, in accordance with the second example, since the functions of the MDMS are unified in the SM, it is possible to eliminate the need to perform the encryption and decryption of the power consumption.

The DR issuance system, MDMS, SM and HEMS as described above may also be realized using a general-purpose computer device as basic hardware. That is, processing of each block in the system or the apparatus can be realized by causing a processor mounted in the above general-purpose computer device to execute a program. In this case, the system or the apparatus may be realized by installing the above described program in the computer device beforehand or may be realized by storing the program in a storage medium such as a CD-ROM or distributing the above described program over a network and installing this program in the computer device as appropriate. Furthermore, the storage in the system or the appartus may also be realized using a memory device or hard disk incorporated in or externally added to the above described computer device or a storage medium such as CD-R, CD-RW, DVD-RAM, DVD-R as appropriate.

**Claims**

1. A data managing apparatus (102) comprising:

    a storage (502) to store information on an electricity unit price applied to a customer for each of a plurality of periods of time;
    a power consumption acquiring unit (503) to acquire a history of power consumption for the customer, from a meter apparatus (104) of the customer;
    an information generating unit (504);
    a communicating unit (506); and
    a decryption key acquiring unit (505),

    wherein, as the history of the power consumption, the power consumption acquiring unit (503) is adapted to acquire power consumption measured and encrypted at a fixed time interval, from the meter apparatus (104) the decryption key acquiring unit (505) is adapted to acquire a decryption key for each electricity unit price, from the meter apparatus, the decryption key being a summed up key of keys used for encryption of the power consumption for the ones of the periods of time for which same electricity unit price is applied,
    the information generating unit (504) is adapted to sum up the encrypted power consumption for the ones of the periods of time for which the same electricity unit price is applied to calculate an integrated value of the encrypted power consumption for each electricity unit price, and is adapted to decrypt the integrated value with the decryption key for each electricity unit price to generate second information indicating the decrypted integrated value for each electricity unit price, and
    the communicating unit (506) is adapted to send the second information to an external system.

2. A meter apparatus (104) comprising:

    a storage to store information on an electricity unit price applied to a customer for each of a plurality of periods of time;
    a measuring unit (401) to measure power consumption for the customer at a fixed time interval;
    a key determining unit (403) to switch a key for encryption, depending on time;
    an encrypting unit (404) to encrypt the power consumption measured by the measuring unit (401), with the key;
    a decryption key generating unit (406) to sum up keys used for encryption of the power consumption, for the ones of the periods of time for which same electricity unit price is applied to obtain a decryption key which is a summed up key of said keys for each electricity unit price wherein the decryption key is to decrypt an integrated value of the encrypted power consumption for the ones of the periods of time for which the same electricity unit price is applied; and
    a communicating unit (407) to send the power consumption encrypted by the encryption unit and the decryption key for each electricity unit price, to a data managing apparatus.

3. A data managing method
providing information on an electricity unit price applied to a customer for each of a plurality of periods of time; acquiring power consumption measured and encrypted at a fixed time interval, from the meter apparatus as a history of power consumption for the customer (S15); summing up the power consumption for ones of the periods of time for which same electricity unit price is applied to generate first information indicating an integrated value of the power consumption for each electricity unit price (S16); acquiring a decryption key for each electricity unit price, from the meter apparatus, the decryption key being a summed up key of keys used for encryption of the power consumption for the ones of the periods of time for which same electricity unit price is applied (S18, S19); decrypting the integrated value with the decryption key for each electricity unit price to generate second information indicating the decrypted integrated value for each electricity unit price (S20); and sending the second information to an external system.

4. A data managing method
providing information on an electricity unit price applied to a customer for each of a plurality of periods of time; measuring power consumption for a customer at a fixed time interval;
switching a key for encryption, depending on time; encrypting the power consumption as measured, with the key; summing up keys used for encryption of the power consumption for the ones of the periods of time for which same electricity unit price is applied to obtain a decryption key which is a summed up key of said keys for each electricity unit price wherein the decryption key is to decrypt an integrated value of the encrypted power consumption for the ones of the periods of time for which the same electricity unit price is applied; and
sending the power consumption encrypted and the decryption key for each electricity unit price, to an external system.

## Patentansprüche

1. Datenverwaltungsvorrichtung (102), umfassend:

einen Speicher (502), um Informationen über einen auf einen Kunden angewandten Elektrizitätseinheitspreis für jede aus einer Vielzahl von Zeitperioden zu speichern;
eine Leistungsverbrauchserfassungseinheit (503), um eine Verlaufsgeschichte des Leistungsverbrauchs für den Kunden von einer Zählervorrichtung (104) des Kunden zu erfassen;
eine Informationserzeugungseinheit (504);
eine Kommunikationseinheit (506); und
eine Entschlüsselungsschlüsselerfassungseinheit (505),

wobei die Leistungsverbrauchserfassungseinheit (503) als Verlaufsgeschichte des Leistungsverbrauchs dafür angepasst ist, gemessenen und verschlüsselten Leistungsverbrauch in einem festen Zeitintervall von der Zählervorrichtung (104) zu erfassen,
die Entschlüsselungsschlüsselerfassungseinheit (505) dafür angepasst ist, einen Entschlüsselungsschlüssel für jeden Elektrizitätseinheitspreis von der Zählervorrichtung zu erfassen, wobei der Entschlüsselungsschlüssel ein aufsummierter Schlüssel von zur Verschlüsselung des Leistungsverbrauchs für jene der Zeitperioden verwendeten Schlüsseln ist, für die derselbe Elektrizitätseinheitspreis angewandt wird;
die Informationserzeugungseinheit (504) dafür angepasst ist, den verschlüsselten Leistungsverbrauch für jene der Zeitperioden aufzusummieren, für die derselbe Elektrizitätseinheitspreis angewandt wird, um einen integrierten Wert des verschlüsselten Leistungsverbrauchs für jeden Elektrizitätseinheitspreis zu berechnen, und dafür angepasst ist, den integrierten Wert mit dem Entschlüsselungsschlüssel für jeden Elektrizitätseinheitspreis zu entschlüsseln, um zweite Informationen zu erzeugen, die den entschlüsselten integrierten Wert für jeden Elektrizitätseinheitspreis angeben, und
die Kommunikationseinheit (506) dafür angepasst ist, die zweiten Informationen an ein externes System zu senden.

2. Zählervorrichtung (104), umfassend:

einen Speicher, um Informationen über einen auf einen Kunden angewandten Elektrizitätseinheitspreis für jede aus einer Vielzahl von Zeitperioden zu speichern;
eine Messeinheit (401), um Leistungsverbrauch für den Kunden in einem festen Zeitintervall zu messen;
eine Schlüsselbestimmungseinheit (403), um einen Schlüssel zur Verschlüsselung zeitabhängig umzuschalten;
eine Verschlüsselungseinheit (404), um den durch die Messeinheit (401) gemessenen Leistungsverbrauch mit dem Schlüssel zu verschlüsseln;

eine Entschlüsselungsschlüsselerzeugungseinheit (406), um für die Verschlüsselung des Leistungsverbrauchs verwendete Schlüssel für jene der Zeitperioden aufzusummieren, für die derselbe Elektrizitätseinheitspreis angewandt wird, um einen Entschlüsselungsschlüssel zu erhalten, der ein aufsummierter Schlüssel der Schlüssel für jeden Elektrizitätseinheitspreis ist, wobei der Entschlüsselungsschlüssel dafür da ist, einen integrierten Wert des verschlüsselten Leistungsverbrauchs für jene der Zeitperioden zu entschlüsseln, für die derselbe Elektrizitätseinheitspreis angewandt wird; und

eine Kommunikationseinheit (407), um den durch die Verschlüsselungseinheit verschlüsselten Leistungsverbrauch und den Entschlüsselungsschlüssel für jeden Elektrizitätseinheitspreis an eine Datenverwaltungsvorrichtung zu senden.

3. Datenverwaltungsverfahren mit

Bereitstellen von Informationen über einen auf einen Kunden angewandten Elektrizitätseinheitspreis für jede aus einer Vielzahl von Zeitperioden;

Erfassen von in einem festen Zeitintervall gemessenem und verschlüsseltem Leistungsverbrauch von der Zählervorrichtung als eine Verlaufsgeschichte des Leistungsverbrauchs für den Kunden (S15);

Aufsummieren des Leistungsverbrauchs für jene der Zeitperioden, für die derselbe Elektrizitätseinheitspreis angewandt wird, um erste Informationen zu erzeugen, die einen integrierten Wert des Leistungsverbrauchs für jeden Elektrizitätseinheitspreis angeben (S16);

Erfassen eines Entschlüsselungsschlüssels für jeden Elektrizitätseinheitspreis von der Zählervorrichtung, wobei der Entschlüsselungsschlüssel ein aufsummierter Schlüssel von zur Verschlüsselung des Leistungsverbrauchs für jene der Zeitperioden verwendeten Schlüsseln ist, für die derselbe Elektrizitätseinheitspreis angewandt wird (S18, S19);

Entschlüsseln des integrierten Werts mit dem Entschlüsselungsschlüssel für jeden Elektrizitätseinheitspreis, um zweite Informationen zu erzeugen, die den entschlüsselten integrierten Wert für jeden Elektrizitätseinheitspreis angeben (S20); und

Senden der zweiten Informationen an ein externes System.

4. Datenverwaltungsverfahren mit

Bereitstellen von Informationen über einen auf einen Kunden angewandten Elektrizitätseinheitspreis für jede aus einer Vielzahl von Zeitperioden;

Messen des Leistungsverbrauchs für einen Kunden in einem festen Zeitintervall; zeitabhängiges Umschalten eines Schlüssels zur Verschlüsselung;

Verschlüsseln des Leistungsverbrauchs wie gemessen mit dem Schlüssel; Aufsummieren von für Verschlüsselung des Leistungsverbrauchs für jene der Zeitperioden verwendeten Schlüsseln, für die derselbe Elektrizitätseinheitspreis angewandt wird, um einen Entschlüsselungsschlüssel zu erhalten, der ein aufsummierter Schlüssel der Schlüssel für jeden Elektrizitätseinheitspreis ist, wobei der Entschlüsselungsschlüssel dafür da ist, einen integrierten Wert des verschlüsselten Leistungsverbrauchs für jene der Zeitperioden zu entschlüsseln, für die derselbe Elektrizitätseinheitspreis angewandt wird; und

Senden des verschlüsselten Leistungsverbrauchs und des Entschlüsselungsschlüssels für jeden Elektrizitätseinheitspreis an ein externes System.

**Revendications**

1. Appareil de gestion de données (102) comprenant :

une unité de stockage (502) pour stocker des informations sur un prix unitaire d'électricité appliqué à un client pour chacune d'une pluralité de périodes de temps ;

une unité d'acquisition de consommation d'énergie (503) pour acquérir un historique de consommation d'énergie pour le client, à partir d'un appareil de mesure (104) du client ;

une unité de génération d'informations (504) ;

une unité de communication (506) ; et

une unité d'acquisition de clé de déchiffrement (505)

dans lequel, en tant qu'historique de la consommation d'énergie, l'unité d'acquisition de consommation d'énergie (503) est adaptée à acquérir une consommation d'énergie mesurée et chiffrée à un intervalle de temps fixe, à partir de l'appareil de mesure (104) ;

l'unité d'acquisition de clé de déchiffrement (505) est adaptée à acquérir une clé de déchiffrement pour chaque prix unitaire d'électricité, à partir de l'appareil de mesure, la clé de déchiffrement étant une clé additionnée de clés utilisées pour le chiffrement de la consommation d'énergie pour celles des périodes de temps pour lesquelles le même prix unitaire d'électricité est appliqué,

l'unité génératrice d'informations (504) est adaptée à additionner la consommation d'énergie chiffrée pour lesdites périodes pour lesquelles le même prix unitaire d'électricité est appliqué pour calculer une valeur intégrée de la consommation d'énergie chiffrée pour chaque prix unitaire d'électricité, et est adaptée à déchiffrer la valeur intégrée avec la clé de déchiffrement pour chaque prix unitaire d'électricité afin de générer des secondes informations indiquant la valeur intégrée déchiffrée pour chaque prix unitaire d'électricité, et

l'unité de communication (506) est adaptée à envoyer les secondes informations à un système externe.

2.  Appareil de mesure (104) comprenant :

   une unité de stockage pour stocker des informations sur un prix unitaire d'électricité appliqué à un client pour chacune d'une pluralité de périodes de temps ;
   une unité de mesure (401) pour mesurer la consommation d'énergie pour le client à un intervalle de temps fixe ;
   une unité de détermination de clé (403) pour commuter une clé de chiffrement, en fonction du moment ;
   une unité de chiffrement (404) pour chiffrer la consommation d'énergie mesurée par l'unité de mesure (401), avec la clé ;
   une unité de génération de clé de déchiffrement (406) pour additionner des clés utilisées pour le chiffrement de la consommation d'énergie, pour celles des périodes de temps pour lesquelles le même prix unitaire d'électricité est appliqué pour obtenir une clé de déchiffrement qui est une clé additionnée desdites clés pour chaque prix unitaire d'électricité dans lequel la clé de déchiffrement est destinée à déchiffrer une valeur intégrée de la consommation d'énergie chiffrée pour lesdites périodes pour lesquelles le même prix unitaire d'électricité est appliqué ; et
   une unité de communication (407) pour envoyer la consommation d'énergie chiffrée par l'unité de chiffrement et la clé de déchiffrement pour chaque prix unitaire d'électricité, à un appareil de gestion de données.

3.  Méthode de gestion de données
   fournissant des informations sur un prix unitaire d'électricité appliqué à un client pour chacune d'une pluralité de périodes de temps ;
   acquérant une consommation d'énergie mesurée et chiffrée à un intervalle de temps fixe, à partir de l'appareil de mesure en tant qu'historique de consommation d'énergie pour le client (S15) ;
   additionnant la consommation d'énergie pour celles des périodes pour lesquelles le même prix unitaire d'électricité est appliqué pour générer des premières informations indiquant une valeur intégrée de la consommation d'énergie pour chaque prix unitaire d'électricité (S16) ;
   acquérant une clé de déchiffrement pour chaque prix unitaire d'électricité, à partir de l'appareil de mesure, la clé de déchiffrement étant une clé additionnée des clés utilisées pour le chiffrement de la consommation d'énergie pour lesdites périodes pour lesquelles le même prix unitaire est appliqué (S18, S19) ;
   déchiffrant la valeur intégrée avec la clé de déchiffrement pour chaque prix unitaire d'électricité afin de générer des secondes informations indiquant la valeur intégrée déchiffrée pour chaque prix unitaire d'électricité (S20) ; et
   envoyant les secondes informations à un système externe.

4.  Méthode de gestion de données
   fournissant des informations sur un prix unitaire d'électricité appliqué à un client pour chacune d'une pluralité de périodes de temps ;
   mesurant la consommation d'énergie d'un client à un intervalle de temps fixe ; commutant une clé de chiffrement, en fonction du moment ;
   chiffrant la consommation d'énergie telle que mesurée, avec la clé ;
   additionnant les clés utilisées pour le chiffrement de la consommation d'énergie pour celles des périodes pour lesquelles le même prix unitaire d'électricité est appliqué pour obtenir une clé de déchiffrement qui est une clé additionnée desdites clés pour chaque prix unitaire d'électricité dans lequel la clé de déchiffrement est destinée à déchiffrer une valeur intégrée de la consommation électrique chiffrée pour lesdites périodes de temps pour lesquelles le même prix unitaire d'électricité est appliqué ; et
   envoyant la consommation d'énergie chiffrée et la clé de déchiffrement pour chaque prix unitaire d'électricité, à un système externe.

FIG. 1

EP 2 787 464 B1

DR ISSUING SYSTEM

201

DR EXECUTION
DETERMINING UNIT

206

COMMUNICATING
UNIT

205

BILLING AMOUNT
CALCULATING UNIT

DR EXECUTION
HISTORY STORAGE

BILLING
INFORMATION
ACQUIRING
UNIT

CUSTOMER
INFORMATION
STORAGE

203

204

202

FIG. 2

EP 2 787 464 B1

FIG. 3

EP 2 787 464 B1

MS

| 403 | 407 | 401 | 404 |
|---|---|---|---|
| KEY SELECTING UNIT | COMMUNICATING UNIT | POWER CONSUMPTION MEASURING UNIT | ENCRYPTION UNIT |

| KEY INFORMATION STORAGE | KEY USAGE HISTORY STORAEGE | | DECRYPTION KEY GENERATING UNIT |
|---|---|---|---|
| 402 | 405 | | 406 |

FIG. 4

MDMS

502

POWER
CONSUMPTION
STORAGE

506

COMMUNICATING
UNIT

504

BILLING
INFORMATION
GENERATING
UNIT

SM INFORMATION
STORAGE

DR HISTORY
ACQUIRING UNIT

DECRYPTION KEY
ACQUIRING UNIT

501

503

505

FIG. 5

START

DR ISSUING SYSTEM SENDS ACQUISITION REQUEST OF POWER CONSUMPTION FOR CUSTOMER, TO MDMS — STEP S11

MDMS SENDS DR HISTORY ACQUISITION REQUEST TO SM — STEP S12

SM TRANSFERS RECEIVED DR HISTORY ACQUISITION REQUEST TO HEMS — STEP S13

HEMS RETURNS DR HISTORY TO SM — STEP S14

SM TRANSFERS DR HISTORY TO MDMS — STEP S15

MDMS OBTAINS INTEGRATED VALUE (ENCRYPTED) FOR EACH UNIT PRICE BY SUMMING UP POWER CONSUMPTION (ENCRYPTED) FOR EACH PERIOD OF TIME AT THE SAME UNIT PRICE — STEP S16

MDMS INQUIRES DECRYPTION KEY FOR EACH UNIT PRICE, TO SM — STEP S17

SM GENERATES DECRYPTION KEY FOR EACH UNIT PRICE BY SUMMING UP KEYS USED FOR ENCRYPTION FOR EACH PERIOD OF TIME AT THE SAME UNIT PRICE — STEP S18

SM SENDS DECRYPTION KEY FOR EACH UNIT PRICE, TO MDMS — STEP S19

MDMS SENDS INTEGRATED VALUE (ENCRYPTED) FOR EACH UNIT PRICE AND DECRYPTION KEY FOR EACH UNIT PRICE, TO DR ISSUING SYSTEM — STEP S20

DR ISSUING SYSTEM DECRYPTS INTEGRATED VALUE (ENCRYPTED) FOR EACH UNIT PRICE WITH DECRYPTION KEY FOR EACH UNIT PRICE TO OBTAIN INTEGRATED VALUE OF POWER CONSUMPTION FOR EACH UNIT PRICE — STEP S21

DR ISSUING SYSTEM CALCULATES BILLING AMOUNT IN BILLING APPLICATION DURATION T1 — STEP S22

END

FIG. 6

FIG. 7

EP 2 787 464 B1

FIG. 8

MS

701 702 703 704

| COMMUNICATING UNIT | POWER CONSUMPTION MEASURING UNIT | DISPLAYING UNIT | BILLING INFORMATION GENERATING UNIT |

| DR HISTORY STORAGE | CONTROLLING UNIT | POWER CONSUMPTION STORAGE |

705 706 707

FIG. 9

EP 2 787 464 B1

START

DR ISSUING SYSTEM SENDS ACQUISITION REQUEST OF POWER CONSUMPTION FOR CUSTOMER, TO SM ⟶ STEP S31

SM OBTAINS DR HISTORY ⟶ STEP S32

SM OBTAINS INTEGRATED VALUE FOR EACH UNIT PRICE BY SUMMING UP POWER CONSUMPTION (NOT ENCRYPTED) FOR EACH PERIOD OF TIME AT THE SAME UNIT PRICE ⟶ STEP S33

SM SENDS INTEGRATED VALUE FOR EACH UNIT PRICE, TO DR ISSING SYSTEM ⟶ STEP S34

DR ISSUING SYSTEM ADJUSTS BILLING AMOUNT IN BILLING APPLICATION DURATION T1, BASED ON INTEGRATED VALUE FOR EACH UNIT PRICE RECEIVED FROM SM ⟶ STEP S35

END

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012103896 A1
- US 2012245870 A